(19) **Europäisches Patentamt / European Patent Office / Office européen des brevets**

(11) **EP 1 546 662 B1**

(12) **EUROPEAN PATENT SPECIFICATION**

(45) Date of publication and mention
of the grant of the patent:
**05.12.2018 Bulletin 2018/49**

(21) Application number: **03747329.5**

(22) Date of filing: **24.04.2003**

(51) Int Cl.:
*G01F 1/74* *(2006.01)*     *G01F 1/708* *(2006.01)*
*G01F 1/712* *(2006.01)*     *G01F 1/66* *(2006.01)*
*G01N 29/024* *(2006.01)*     *G01N 29/22* *(2006.01)*
*G01N 29/46* *(2006.01)*

(86) International application number:
**PCT/US2003/012956**

(87) International publication number:
**WO 2003/091671 (06.11.2003 Gazette 2003/45)**

(54) **APPARATUS AND METHOD FOR MEASURING PARAMETERS OF A MIXTURE HAVING SOLID PARTICLES SUSPENDED IN A FLUID FLOWING IN A PIPE**

VORRICHTUNG UND VERFAHREN ZUR MESSUNG VON PARAMETERN EINER MISCHUNG MIT IN EINEM ROHR STRÖMENDEN FLUID SUSPENDIERTEN FESTPARTIKELN

APPAREIL ET PROCEDE DE MESURE DE PARAMETRES D'UN MELANGE COMPORTANT DES PARTICULES SOLIDES EN SUSPENSION DANS UN FLUIDE S'ECOULANT DANS UN TUYAU

(84) Designated Contracting States:
**AT BE BG CH CY CZ DE DK EE ES FI FR GB GR HU IE IT LI LU MC NL PT RO SE SI SK TR**

(30) Priority: **24.04.2002 US 375847 P**
**12.11.2002 US 425436 P**
**15.11.2002 US 426724 P**
**23.01.2003 US 349716**
**26.02.2003 US 376427**

(43) Date of publication of application:
**29.06.2005 Bulletin 2005/26**

(73) Proprietor: **Cidra Corporate Services, Inc.**
**Wallingford, CT 06492 (US)**

(72) Inventors:
• **GYSLING, Daniel, L**
  **Glastonbury, CT 06033 (US)**
• **LOOSE, Douglas, H.**
  **Southington, CT 06489 (US)**

(74) Representative: **Schmitt-Nilson Schraud Waibel Wohlfrom**
**Patentanwälte Partnerschaft mbB**
**Destouchesstraße 68**
**80796 München (DE)**

(56) References cited:
**EP-B1- 1 476 727     WO-A-00/00793**
**WO-A-01/02810     WO-A-93/14382**

## Description

### Cross-Reference To Related Patent Applications

This application is a continuation in part of U.S. Patent Application No. 10/349,716 (Cidra Docket No. CC-0579) filed on January 23, 2003, which claimed the benefit of U.S. Provisional Application No. 60/351,232 (Cidra Docket No. CC-0410), filed January 23, 2002; U.S. Provisional Application No. 60/359,785 (Cidra Docket No. CC-0403), filed February 26,2002; U.S. Provisional Application No. 60/375,847 (Cidra Docket No. CC-0468), filed April 24, 2002; U.S. Provisional Application No. 60/425,436 (Cidra Docket No. CC-0538), filed November 12, 2002; and U.S. Provisional Application No. 60/426,724 (Cidra Docket No. CC-0554), filed November 15, 2002; and is a continuation in part of U.S. Patent Application No. 10/376,427 (Cidra Docket No. CC-0596) filed on February 26, 2003, which claimed the benefit of U.S. Provisional Application No. 60/359,785 (Cidra Docket No. CC-0403), filed February 26,2002; and is a continuation-in-part of U.S. Patent Application Serial No. 10/349,716 (Cidra Docket No. CC-0579), filed January 23, 2003, which claims the benefit of U.S. Provisional Application No. 60/351,232 (Cidra Docket No. CC-0410), filed January 23, 2002; U.S. Provisional Application No. 60/359,785 (Cidra Docket No. CC-0403), filed February 26,2002; U.S. Provisional Application No. 60/375,847 (Cidra Docket No. CC-0468), filed April 24, 2002; U.S. Provisional Application No. 60/425,436 (Cidra Docket No. CC-0538), filed November 12, 2002; and U.S. Provisional Application No. 60/426,724 (Cidra Docket No. CC-0554), filed November 15, 2002.

### Technical Field

This invention relates to an apparatus for measuring the flow passing within a pipe, and more particularly to an apparatus and method for measuring the speed of sound propagating in the flow, having particles suspended within a continuous fluid, to determine parameters, such as particle/fluid ratio, particle size and volumetric flow rate of the flow in pipes using acoustic dynamic pressures.

### Background Art

This invention provides a method to measure parameters of a fluid/particle mixture in a pipe that can be used in many applications, such as in chemical, pharmaceutical, petroleum and power generation industries. In particular, the invention provides a method to measure pulverized coal and air mixtures used in pulverized fuel delivery systems in place in a large percentage of coal fired boilers used in the power generation industry.

Currently, well over 50% of the electricity in the US is generated with coal. While coal is considered a cost effective, abundant resource in the US, the use of coal has been restricted due in large part to environmental concerns. To mitigate this impact, the US Department of Energy and the Power Generation industry have large programs designed to develop technology to reduce the environment effects of burning coal. These Clean Coal Initiatives include technology designed to develop improvements in the combustion process to improve efficiency while reducing pollutants such as unburned carbon, ash, and nitrous oxide (NOx).

The ability to measure the flow rate and composition of the air /coal mixture within the coal pipes is an important aspect of any system or strategy designed to optimize the performance of the PF delivery system. The industry recognizes this and therefore has been developing a wide variety of technologies to perform this measurement. These include probe based and sampling devices, as well as real time meters based on a wide variety of technologies including electrostatic charges, microwaves, and ultrasonic.

According to WO 00 00793 A1 at least one parameter of at least one fluid in a pipe is measured using a spatial array of acoustic pressure sensors placed at predetermined axial locations along the pipe. The pressure sensors provide acoustic pressure signals on lines which are provided to signal processing logic which determines the speed of sound of the fluid (or mixture) in the pipe using acoustic spatial array signal processing techniques with the direction of propagation of the acoustic signals along the longitudinal axis of the pipe. Numerous spatial array processing techniques may be employed to determined the speed of sound. The speed of sound is provided to a logic which calculates the percent composition of the mixture, e.g., water fraction, or any other parameter of the mixture or fluid which is related to the sound speed.

WO 01 02810 A1 discloses a flow rate measurement system including two measurement regions located an average axial distance apart along the pipe, the first measurement region having two unsteady pressure sensors, located a first distance apart, and the second measurement region, having two other unsteady pressure sensors, located a second distance apart, each capable of measuring the unsteady pressure in the pipe. Signals from each pair of pressure sensors and are differenced by summers, respectively, to form spatial wavelength filters, respectively. Each spatial filter filters out acoustic pressure disturbances and other long wavelength pressure disturbances in the pipe and passes short-wavelength low-frequency vortical pressure disturbances associated with the vortical flow field. The spatial filters provide signals to band pass filters that filter out high frequency signals. The filtered signals from the two regions are cross-correlated by a cross-correlation logic to determine a time delay between the two sensing locations which is divided into the distance to obtain a convection velocity that is related to an average flow rate of the fluid (i.e., one or more liquids and/or gases) flowing in the pipe.

## Summary of the Invention

Objects of the present invention include providing a system for measuring the speed of sound propagating through a particle/fluid mixture in pipes in industrial boiler systems and related processes, such as coal fired boiler systems, to determine particular parameters of the mixture.

According to the present invention, an apparatus for measuring at least one parameter of a particle/fluid mixture in a pipe includes a spatial array of at least two pressure sensors, disposed at different axial locations along the pipe. Each of the pressure sensors measures an unsteady pressure within the pipe at a corresponding axial location. Each of said sensors provides a pressure signal indicative of the unsteady pressure within the pipe at said axial location of a corresponding one of said sensors. A signal processor as defined in independent claim 1, responsive to said pressure signals, provides a signal indicative of the at least one parameter of the mixture in the pipe.

According to the present invention, a method for measuring at least one parameter of a particle/fluid mixture in a pipe includes measuring unsteady pressures within the pipe at at least two predetermined axial measurement locations along the pipe to provide a pressure signal indicative of the unsteady pressure within the pipe at each of the at least two predetermined axial measurement locations. Further the method includes calculating the at least one parameter of the particle/fluid mixture in the pipe using the unsteady pressure measured at the axial measurement locations, as defined in independent claim 13.

The foregoing and other objects, features and advantages of the present invention will become more apparent in light of the following detailed description of exemplary embodiments thereof.

## Brief Description of the Drawings

Fig. 1 is a block diagram of a flow meter for measuring the speed of sound of the fluid/particle mixture flowing with a pipe, in accordance with the present invention.

Fig. 2 is a schematic diagram of a pulverized fuel (PF)/air mixture parameter measurement system within a coal fired boiler system, in accordance with the present invention.

Fig. 3 is a magnified photograph showing particle size of coal typical of the system shown in Fig. 2.

Fig. 4 is a plot of the speed of sound of a mixture versus the frequency in air/coal mass flow ratio, in accordance with the present invention.

Fig. 5 is a plot of actual data and a model of the speed of sound as a function of frequency for air/coal mixtures, in accordance with the present invention.

Fig. 6 is a plot showing the standard deviation of sound speed versus frequency for various arrays of a PF/air mixture parameter measurement system, in accordance with the present invention.

Fig. 7 is a plot of sound speed as a function of frequency for air/coal mixtures with fixed particle size (50 mm) and varying air-to-fuel mass Ratio in accordance with the present invention.

Fig. 8 is a plot of sound speed as a function of frequency for air/coal mixtures with varying particle size where the air-to-fuel mass ratio is equal to 1.8 in accordance with the present invention.

Fig. 9 is a plot of sound speed as function of air/coal ratio in accordance with the present invention.

Fig. 10 is a flow diagram of an optimization procedure employed to determine air-to-fuel ratio and particle size from analytical model and experimentally determined dispersive speed of sound data in accordance with the present invention.

Fig. 11 is a plot of the results of the optimization procedure of Fig. 10 applied to data recorded from an array of sensors listening to flow in a six inch circular duct, 50 $\mu$m particle size, 100 ft/sec air flow rate with an air-to-fuel ratio of 1.8.

Fig. 12 is a plot of the results of the optimization procedure of Fig. 10 applied to a series of data sets with varying air-to-fuel ratio.

Fig. 13 is a k$\omega$ plot of data processed from an array of pressure sensors use to measure the speed of sound of a coal/air mixture flowing in a pipe, in accordance with the present invention.

Fig. 14 is a side elevational view of a plurality of pressure sensors, having PVDF, clamped to the outer surface of the pipe, in accordance with the present invention.

Fig. 15 is a partial perspective view of one of the pressure sensors of Fig. 14.

**Best Mode for Carrying Out the Invention**

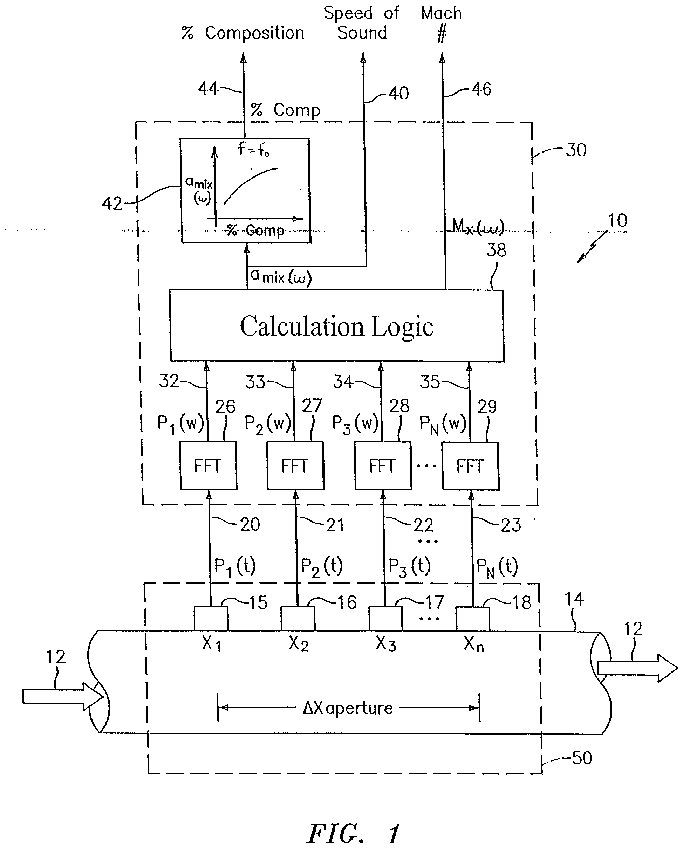

Referring to Fig. 1, a flow meter 10 embodying the present invention is provided that measures a number of parameters/characteristics of a mixture 12 of solid particles suspended within a continuous fluid flowing within a pipe or conduit 14, wherein a fluid is defined as a liquid and/or a gas. The flow meter may be configured and programmed to measure the speed of sound propagating through the mixture. The flow meter can measure at least one of the following parameters of the mixture flow 12: the fluid/particle concentration (volumetric phase fraction), the volumetric flow rate, the size of the solid particles, the mass flow of the mixture and the velocity of the mixture. To determine any one of these parameters, the flow meter 10 measures the unsteady pressures created by the speed of sound (SOS) propagating through the mixture flowing in the pipe 14, which will be described in greater detail hereinafter.

The solid particles of the mixture 12 may be of any size, shape and material. For example, the particles may be small in size as in the form of a powder, in a granular form, or greater in size. The flow meter 10 can be used in any application that carries solid particles suspended in a fluid through a pipe, such as in chemical, pharmaceutical, petroleum and power generation applications. For example, the present invention is well suited to measure the parameters (e.g. air/coal ratio, particle size) for power generation systems that use pulverized coal to fire the furnace a steam boiler system.

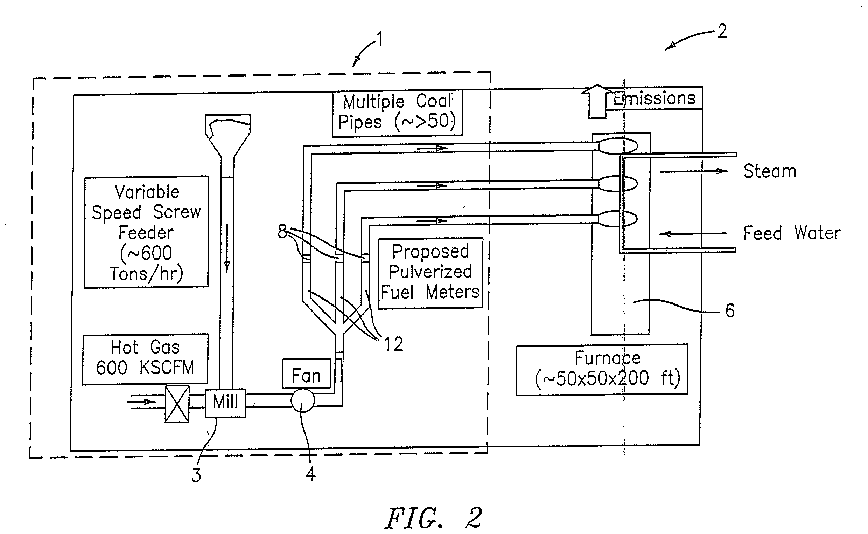

As one example, the present invention will be discussed in the context of a Pulverized Fuel (PF) delivery system for power generation, but one will appreciate that the flow meter can be applied to any number of other applications, as discussed hereinbefore. A representative PF delivery system 1 is shown in a coal fired boiler system 2 in Fig. 2. The coal is pulverized in a mill 3 and entrained in air produced by many means, such as a fan 4 to transport the PF/air mixture via pipes 12 for delivery to the furnace 6. Typical furnaces can have >50 coal pipes, each 12-20 inch in diameter. Typically, a large utility boiler >300 Mw, can have 4-11 pulverizing mills feeding the furnace. The ability of the PF delivery system to deliver the proper amount of fuel and air to the furnace through these multiple coal pipes, both collectively and individually, has a strong influence on the performance and emissions from the coal fired boiler.

As is known, non-uniformities in the PF delivery system 1 can result in variation of the fuel to air ratios, causing hot spots, regions of high NOx generation, and unburned fuel. The connection between performance of a PF fuel delivery system 1 and a boiler system 2 is well recognized. The flow meter 10 embodying the present invention is capable of measuring the fuel to air ratio and particle size of the pulverized coal provided to the furnace to thereby provide feedback to the operator to provide more efficient combustion of the coal.

As described hereinbefore, the flow meter 10, of the present invention may be configured and programmed to measure and process the detected unsteady pressures $P_1(t)$ - $P_N(t)$ created by acoustic waves propagating through the mixture to determine parameters of the mixture flow 12. One such flow meter 10 is shown in Fig. 1 that measures the speed of sound (SOS) of one-dimensional sound waves propagating through the fluid/particle mixture to determine the composition of the mixture, namely the liquid/particle ratio of the mixture. The flow meter is also capable of determining the average size of the particles, velocity of the mixture, and the volumetric flow rate of the mixture. It is known that sound propagates through various mediums at various speeds in such fields as SONAR and RADAR fields. The speed of sound of a mixture within a pipe 14 may be determined using a number of known techniques, such as those set forth in U.S. Patent No. 6,354,147, entitled "Fluid Parameter Measurement in Pipes Using Acoustic Pressures", issued March 12,2002, and U.S. Patent Application Serial No. 10/007,749, entitled "Fluid Parameter Measurement in Pipes Using Acoustic Pressures", filed November 7, 2001. The present invention utilizes at least one flow meter 10 to determine various parameters of the liquid/particle mixture, wherein one of the parameters is the speed at which sound travels within the mixture pipe system as will be more fully described herein below.

In accordance with the present invention, the speed of sound propagating through the mixture 12 is measured by passively listening to the flow with an array of unsteady pressure sensors to determine the speed at which one-dimensional compression waves propagate through the liquid/particle mixture contained within the pipe 14.

As shown in Fig. 1, the flow meter 10 has an array of at least three acoustic pressure sensors 15,16,17, located at three locations $x_1, x_2, x_3$ axially along the pipe 14. One will appreciate that the sensor array may include more than three pressure sensors as depicted by pressure sensor 18 at location $x_N$. The pressure generated by the acoustic waves may be measured through holes in the pipe 14 ported to external pressure sensors 15 - 18 or by other techniques discussed hereinafter. The pressure sensors 15 - 18 provide pressure time-varying signals $P_1(t), P_2(t), P_3(t), P_N(t)$ on lines 20,21,22,23 to a signal processing unit 30 to known Fast Fourier Transform (FFT) logics 26,27,28, 29, respectively. The FFT logics 26 - 29 calculate the Fourier transform of the time-based input signals $P_1(t)$ - $P_N(t)$ and provide complex frequency domain (or frequency based) signals $P_1(\omega), P_2(\omega), P_3(\omega), P_N(\omega)$ on lines 32,33,34,35 indicative of the frequency content of the input signals. Instead of FFT's, any other technique for obtaining the frequency domain characteristics of the signals $P_1(t)$ - $P_N(t)$, may be used. For example, the cross-spectral density and the power spectral density may be used to form a frequency domain transfer functions (or frequency response or ratios) discussed hereinafter.

The frequency signals $P_1(\omega)$ - $P_N(\omega)$ are fed to $a_{mix}$-Mx Calculation Logic 38 which provides a signal to line 40 indicative of the speed of sound propagating through the mixture $a_{mix}(\omega)$, which is a function frequency (discussed more hereinafter). The $a_{mix}(\omega)$ signal is provided to map (or equation) logic 42, which converts $a_{mix}(\omega)$ to a percent composition of the PF/air mixture and provides a %Comp signal to line 44 indicative thereof (as discussed hereinafter). Also, if the Mach number Mx($\omega$) is not negligible and is desired, the calculation logic 40 may also provide a signal Mx($\omega$) to line 46 indicative of the Mach number Mx($\omega$) which is a function of frequency.

For circular ducts or pipes 12 as shown in Fig. 1, only plane waves propagate for frequencies below the cut-on frequency (ref Acoustics of Ducts and Mufflers, M.J. Munjal, John Wiley & Sons, New York, 1987):

$$f < \frac{1.84}{\pi D} a$$

For a mixture with a sound speed of 500 m/sec in an 18 inch pipe, the cut-off frequency is approximately 600 Hz. Thus, for this example, only one-dimensional acoustic waves propagate below 600 Hz. It is important to note that one-dimensional waves can still propagate above this frequency, but higher order modes may or may not be present.

More specifically, for planar one-dimensional acoustic waves in a homogenous mixture, it is known that the acoustic pressure field P(x,t) at a location x along a pipe, where the wavelength $\lambda$ of the acoustic waves to be measured is long compared to the diameter d of the pipe 12 (i.e., $\lambda/d >> 1$), may be expressed as a superposition of a right traveling wave and a left traveling wave, as follows:

$$P(x,t) = \left( Ae^{-ik_r x} + Be^{+ik_l x} \right) e^{i\omega t} \qquad \text{Eq. 1}$$

where A,B are the frequency-based complex amplitudes of the right and left traveling waves, respectively, x is the pressure measurement location along a pipe, $\omega$ is frequency (in rad/sec, where $\omega = 2\pi f$), and $k_r, k_l$ are wave numbers for the right and left travelling waves, respectively, which are defined as:

$$k_r \equiv \left( \frac{\omega}{a_{mix}(\omega)} \right) \frac{1}{1 + M_x(\omega)} \quad \text{and} \quad k_l \equiv \left( \frac{\omega}{a_{mix}(\omega)} \right) \frac{1}{1 - M_x(\omega)} \qquad \text{Eq. 2}$$

where $a_{mix}(\omega)$ is the speed of sound of the mixture in the pipe, $\omega$ is frequency (in rad/sec), and $M_x(\omega)$ is the axial Mach number of the flow of the mixture within the pipe, where:

$$M_x(\omega) \equiv \frac{V_{mix}}{a_{mix}(\omega)} \qquad \text{Eq. 3}$$

where Vmix is the axial velocity of the mixture. For non-homogenous mixtures, the axial Mach number represents the average velocity of the mixture and the low frequency acoustic field description remains substantially unaltered.

The frequency domain representation P(x,$\omega$) of the time-based acoustic pressure field P(x,t) within a pipe, is the coefficient of the $e^{i\omega t}$ term of Eq. 1, as follows:

$$P(x,\omega) = Ae^{-ik_r x} + Be^{+ik_l x} \qquad \text{Eq. 4}$$

Referring to Fig. 1, we have found that using Eq. 4 for P(x,$\omega$) at three axially distributed pressure measurement locations $x_1, x_2, x_3$ along the pipe 12 leads to an equation for $a_{mix}$ as a function of the ratio of frequency based pressure measurements, which allows the coefficients A,B to be eliminated. For optimal results, A and B are substantially constant over the measurement time and substantially no sound (or acoustic energy) is created or destroyed in the measurement section. The acoustic excitation enters the test section only through the ends of the test section 51 and, thus, the speed of sound within the test section 51 can be measured independent of the acoustic environment outside of the test section. In particular, the frequency domain pressure measurements $P_1(\omega), P_2(\omega), P_3(\omega)$ at the three locations $x_1, x_2, x_3$, respectively, along the pipe 12 using Eq. 1 for right and left traveling waves are as follows:

$$P_1(\omega) = P(x = x_1, \omega) = Ae^{-ik_r x_1} + Be^{+ik_l x_1} \qquad \text{Eq. 5}$$

$$P_2(\omega) = P(x = x_2, \omega) = Ae^{-ik_r x_2} + Be^{+ik_l x_2} \qquad \text{Eq. 6}$$

$$P_3(\omega) = P(x = x_3, \omega) = Ae^{-ik_r x_3} + Be^{+ik_l x_3} \qquad \text{Eq. 7}$$

where, for a given frequency, A and B are arbitrary constants describing the acoustic field between the sensors 14,16,18. Forming the ratio of $P_1(\omega)/P_2(\omega)$ from Eqns. 6,7, and solving for B/A, gives the following expression:

$$R \equiv \frac{B}{A} = \frac{e^{-ik_r x_1} - \left[\dfrac{P_1(\omega)}{P_2(\omega)}\right]e^{-ik_r x_2}}{\left[\dfrac{P_1(\omega)}{P_2(\omega)}\right]e^{ik_l x_2} - e^{ik_l x_1}} \qquad \text{Eq. 8}$$

where R is defined as the reflection coefficient.

Forming the ratio of $P_1(\omega)/P_3(\omega)$ from Eqs. 5 and 7 and solving for zero gives:

$$\frac{e^{-ik_r x_1} + \text{Re}^{ik_l x_1}}{e^{-ik_r x_3} + \text{Re}^{ik_l x_3}} - \left[\frac{P_1(\omega)}{P_3(\omega)}\right] = 0 \qquad \text{Eq. 9}$$

where R=B/A is defined by Eq. 8 and kr and kl are related to $a_{mix}$ as defined by Eq. 2. Eq. 9 may be solved numerically, for example, by defining an "error" or residual term as the magnitude of the left side of Eq.9, and iterating to minimize the error term.

$$mag\left[\frac{e^{-ik_r x_1} + \text{Re}^{ik_l x_1}}{e^{-ik_r x_3} + \text{Re}^{ik_l x_3}} - \left[\frac{P_1(\omega)}{P_3(\omega)}\right]\right] \equiv Error \qquad \text{Eq. 10}$$

The data from the array of sensors may be processed in any domain, including the frequency/spatial domain, the temporal/spatial domain, the temporal/wave-number domain or the wave-number/frequency (k-ω) domain. As such, any known array processing technique in any of these or other related domains may be used if desired.

Also, some or all of the functions within the signal processing unit 30 may be implemented in software (using a microprocessor or computer) and/or firmware, or may be implemented using analog and/or digital hardware, having sufficient memory, interfaces, and capacity to perform the functions described herein.

Acoustic pressure sensors 15 - 18 sense acoustic pressure signals that, as measured, are lower frequency (and longer wavelength) signals than those used for ultrasonic flow meters of the prior art, and thus the current invention is more tolerant to inhomogeneities in the flow, such as roping and other time and space domain inhomogeneities within the flow, even where entrenchment or coal "roping" is unlikely such as following a bend. The term "roping" is a term known to those skilled in this art which represents a form of severe spatial and temporal mal-distribution induced in mixture flows of widely different component densities. It is a condition where a large portion of the coal flow is in a band running along one side of pipe 14.

In addition, the present invention incorporates the compliance of the pipe 14 to determine the effective speed of sound of the pipe/PF/air mixture system. The acoustic pressure signals $P_1(t)$ - $P_N(t)$ are generated within the PF/air mixture of the pipe 14 by a variety of non-discrete sources such as remote machinery, mills, fans 4 (Fig. 2), valves, elbows, as well as the PF/air mixture flow itself. It is this last source, the PF/air mixture 12 flowing within the pipe 14, which is a generic source of acoustic noise that assures a minimum level of acoustics for any PF/air mixture piping systems for which the present invention takes unique advantage. The flow generated acoustics increase with mean flow velocity and the overall noise levels (acoustic pressure levels) are a function of the generating mechanism and the damping mechanism. As such, no external discrete noise source is required within the present invention and thus may operate using passive listening. While the flow meter 10 passively listens to the mixture flow 12, the present invention contemplates adding an acoustic source to inject a desire acoustic wave into the flow to be measured, such as by compressing, vibrating and/or tapping the pipe, to name a few examples.

For certain types of pressure sensors, e.g., pipe strain sensors, accelerometers, velocity sensors or displacement sensors, discussed hereinafter, it may be desirable for the pipe 14 to exhibit a certain amount of pipe compliance.

Alternatively, to minimize any error effects (and the need for the corresponding calibration) caused by pipe compliance, the axial test section 50 of the pipe 14 along where the sensors 15 - 18 are located may be made as rigid as possible. To achieve the desired rigidity, the thickness of the wall of the test section 50 may be made to have a predetermined thickness, or the test section 50 may be made of a very rigid material, e.g., steel, titanium, Kevlar®, ceramic, or other material with a high modulus.

The length of the array (aperture) ΔX of the pressure sensors (15-18) is at least a significant fraction of the measured wavelength of the acoustic waves being measured. As will be described in greater detail, the acoustic wavelength to be measured is a function of at least the dispersion characteristics of the mixture 12, wherein the dispersion characteristic is a function of at least the size and mass of the particles, and the viscosity of the fluid. The greater the dispersion of the mixture (e.g. the greater the size and mass, and/or the less viscous the fluid), the longer the length of the array is needed. Conversely, the lesser the dispersion of the mixture (e.g. the lesser the size and mass, and/or the more viscous the fluid), the shorter the length of the array is needed.

Further, it is within the scope of the present that the spacing of the pressure sensors may be known or arbitrary, provided the location of the sensors is known. The sensors 15-18 may also be equi-spaced (as shown in Fig. 1) or any non-even or non equi-spaced location, as will be described in greater detail hereinafter. One will appreciate that as few as two sensors are required if certain information is known about the acoustic properties of the PF/air mixture piping system.

As discussed, the flow meter 10 measures the speed of sound of one-dimensional sound waves propagating through the fluid/particle mixture to determine the composition of the mixture. Specifically, the speed of sound propagating through dilute solid/air mixtures can be directly related to the mass fraction particles of the flow. A typical PF fuel delivery system 1 may operate with an air to coal mass ratio of 1.5 to 2.5 with coal density of 1200 to 1400 kg/m$^3$ compared to 1.2 kg/m$^3$ for air at standard atmospheric conditions. Thus, meeting the desired mass ratio results in a very dilute mixture of coal on a volumetric basis, on the order of one part in 1000 by volume.

Assuming that the particles of coal are small enough and the acoustic frequencies and the frequencies of perturbations associated with the acoustics are low enough for the solid particles to exhibit negligible slip (both steady and unsteady), the sound speed can be assumed to be non-dispersive (that is constant with frequency) and the volumetric phase fraction of the mixture could be determined through the Wood equation:

$$\rho_{mix} = \sum_{i=1}^{N} \phi_i \rho_i$$

$$\frac{1}{\rho_{mix} a_{mix}^2} = \sum_{i=1}^{N} \frac{\phi_i}{\rho_i a_i^2}$$

$$\sum_{i=1}^{N} \phi_i = 1$$

Including the effect of the compliance introduced by the conduit 12 (in this case a circular pipe of modulus E, radius R and wall thickness t)

$$\frac{1}{\rho_{mix} a_{measured}^2} = \frac{1}{\rho_{mix} a_{mix}^2} + \sigma \quad \text{where} \quad \sigma \equiv \frac{2R}{Et}$$

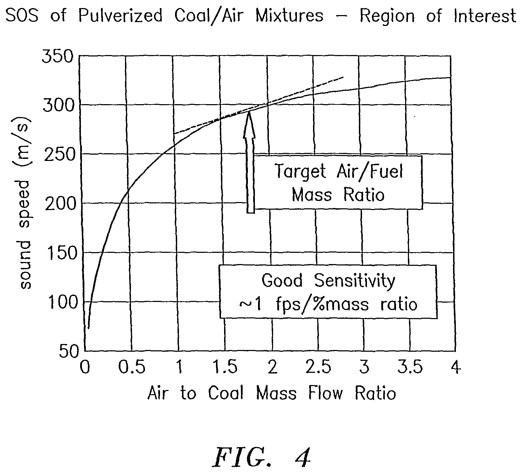

Utilizing the relations above, the speed at which sound travels within the piping system of a representative coal / air mixtures is shown in Fig. 4 as a function of air /coal mass ratio. For this example, the pure air was assumed to have a density of 1.2 kg/m^3 and a sound speed of 365.9 m/s and the coal was assumed to have a density of 1400 kg/m^3 and a sound speed of 2439 m/s. As shown, the effect of increasing coal fraction, i.e. decreasing air/coal ratio is to decrease the sound speed. Physically, adding coal particles effectively mass loads the mixture, while not appreciably changing the compressibility of the air. Over the parameter range of interest, the relation between mixture sound speed and air / coal ratio is well behaved and monatomic.

While the calibration curves based on predictions from first principles are encouraging, using empirical data mapping from sound speed to air / coal ratio may result in improved accuracy of the present invention to measure the air/coal fractions of the mixture.

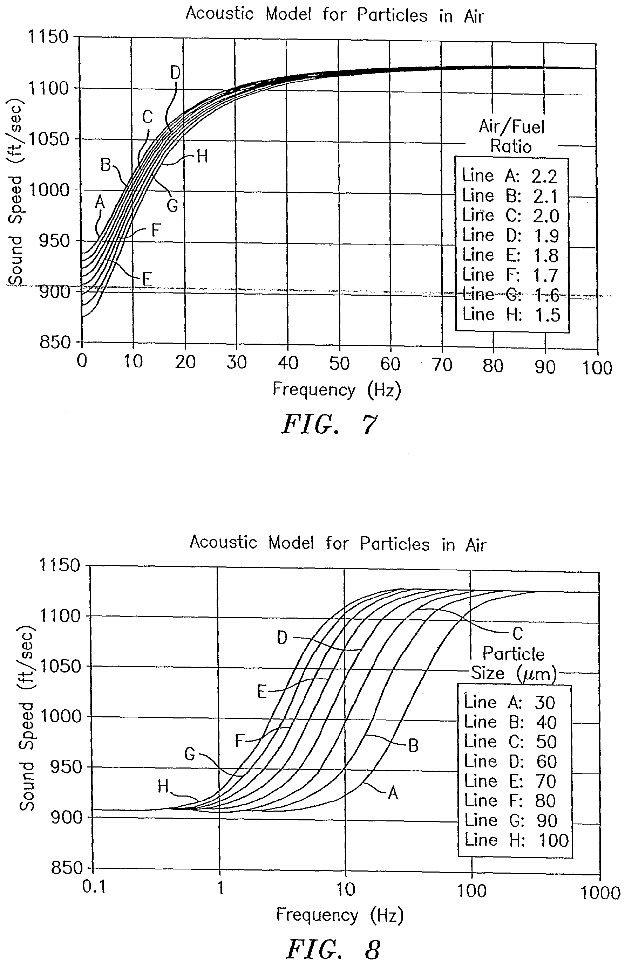

However, it has been discovered that the physical properties of pulverized coal/air mixtures are generally such that there will be velocity slip at all but very low frequencies (on the order of <1-2 Hz for nominally 50 $\mu$m coal particles in air), as shown in Figs. 7 and 8 which will be described in greater detail hereinafter.

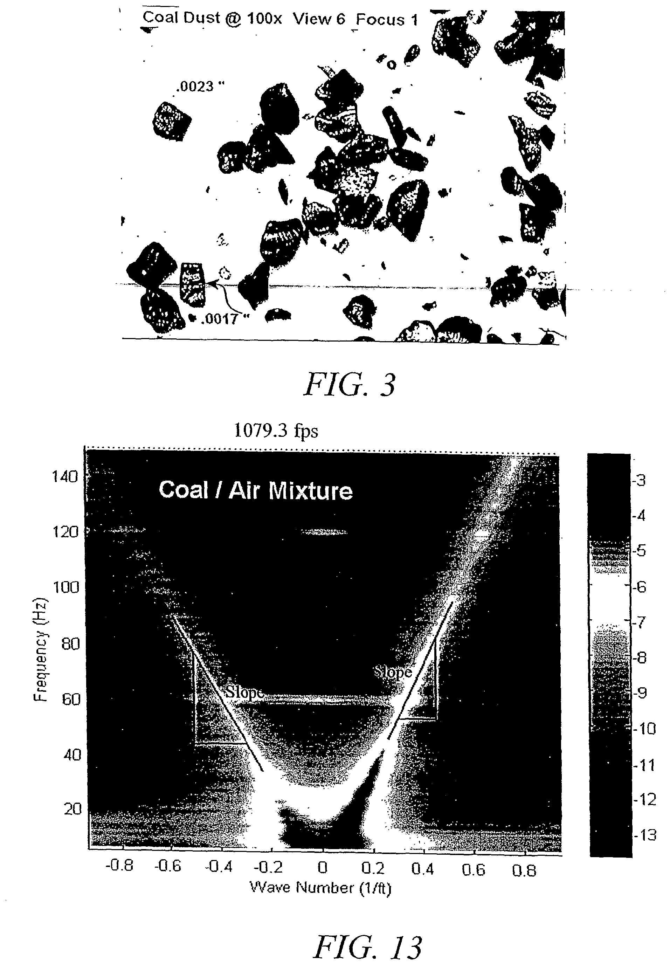

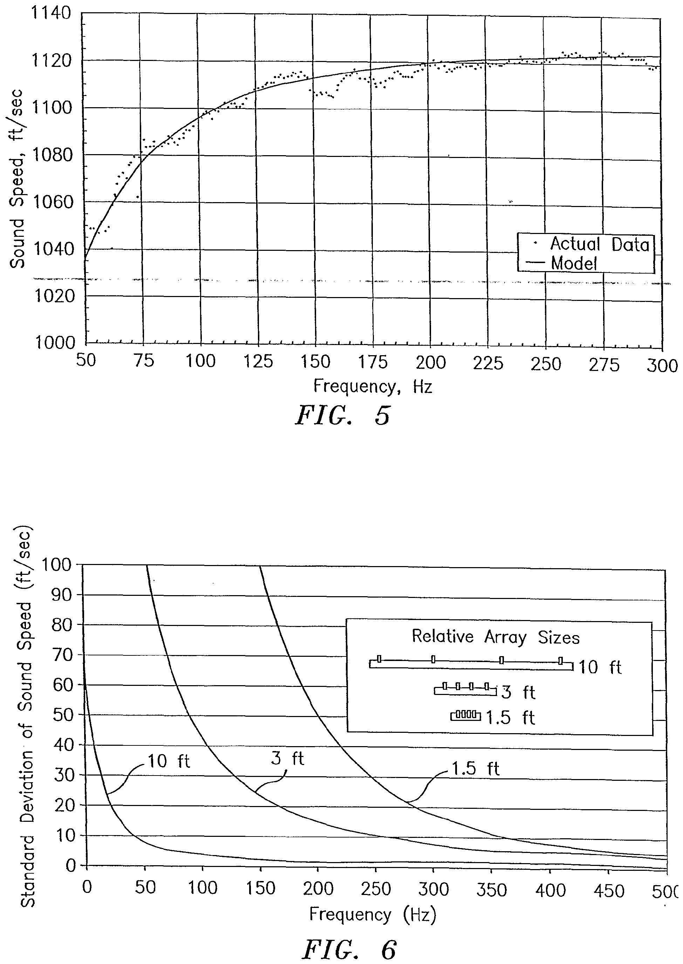

Fig. 5 shows the measured speed of sound as a function of frequency for an actual coal/air mixture 12. The sound speed was measured utilizing passive listening techniques of the present invention as described herein. The frequency dependence of the sound speed was determined by applying a Capon array-processing algorithm at multiple narrow frequency ranges between 50-300 Hz thereby determining a frequency specific acoustic propagation velocity. In this particular example, the data was obtained wherein the coal/air mixture was flowing at nominally 100 ft/sec with an air-to-coal mass ratio equal to 1.8. The coal particles were nominally 50 $\mu$m in size, representative of pulverized coal typically used in power generation and other industrial applications. A magnified view of the coal particles that were used for this test is shown in Fig. 3.

Further shown in Fig. 5, the sound speed increases with increasing frequency and asymptotes toward a constant value. The sound speed asymptote at higher frequencies is essentially the sound speed propagating through air only with no influence of the suspended particles. Also, it is apparent that the sound speed of the coal/air mixture has not reached the quasi-steady limit at the lowest frequency for which sound speed was measured. The sound speed is continuing to decrease at the lower frequency limit. An important discovery of the present invention is that the speed at which sound propagates through dilute particles suspended in a continuous fluid is said to be dispersive. As defined herein, the speed at which acoustic waves propagate through dispersive mixtures varies with frequency.

Measuring the sound speed of a mixture 12 at progressively lower and lower frequencies becomes inherently less accurate as the total length of the array of pressure sensors 15 - 18 ($\Delta x_{aperature}$), which define the aperature of the array, becomes small compared to the wavelength of the acoustics. In general, the aperture should be at least a significant fraction of a wavelength of the sound speed of interest. In a particular embodiment sound speed data was recorded with an array of four sensors, spaced at 12 inches, for a total aperture of three feet. At 50 Hz, a 1000 ft/sec sound wave has a wavelength of 20 ft. Thus, the aperture of this particular array (approx. 36 inches) spanned only 3/20ths of a wavelength, and the array's ability to accurately resolve sound speeds below this was clearly impaired. It is an important aspect of the present invention that the ability to resolve sound speed at low frequencies is directly related to aperture of the array. Consequently longer arrays are used to resolve sound speeds at lower frequencies. As shown in Fig. 6, the standard deviation associated with determining the speed of sound in air is shown as a function of frequency for three arrays of varying aperture, namely 1.5 ft, 3 ft and 10 ft.

Given the practical constraints in accurately measuring sound speeds at ultra-low frequencies, the data suggests that utilizing a quasi-steady model to interpret the relationship between sound speed, measured at frequencies above those at which the quasi-steady model is applicable, and the air-to-fuel ratio would be problematic, and may, in fact, be impractical. Thus, the key to understanding and interpreting the composition of coal/air mixtures through sound speed measurements lies in the dispersive characteristics of the coal/air mixture.

In accordance with the present invention the dispersive nature of the system utilizes a first principles model of the interaction between the air and particles. This model is viewed as being representative of a class of models that seek to account for dispersive effects. Other models could be used to account for dispersive effects without altering the intent of this disclosure (for example, see the paper titled "Viscous Attenuation of Acoustic Waves in Suspensions" by R.L. Gibson, Jr. and M.N. Toksöv). The model allows for slip between the local velocity of the continuous fluid phase and that of the particles. The drag force on the particles by the continuous fluid is modeled by a force proportional to the difference between the local fluid velocity and that of the fluid particles and is balanced by inertial force:

$$F_{drag} = K(U_f - U_p) = \rho_p v_p \frac{\partial U_p}{\partial t}$$

where K = proportionality constant, $U_f$ = fluid velocity, $U_p$ = particle velocity, $\rho_p$ = particle density and $v_p$ = particle volume. The effect of the force on the continuous fluid phase by the fluid particles is modeled as a force term in the axial momentum equation. The axial momentum equation for a control volume of area A and length $\Delta x$ is given by:

$$P_x - P_{x+\Delta x} - K(U_f - U_p)\left\{\frac{\phi_p \Delta x}{v_p}\right\} = \frac{\partial}{\partial t}(\rho_f U_f \Delta x)$$

where P = pressure at locations x and $\Delta x$, $\phi_p$ = volume fraction of the particles, $\rho_f$ = fluid density.
The particle drag force is given by:

$$F_{drag} = K(U_f - U_p) = C_d A_p \frac{1}{2} \rho_f \left(U_f - U_p\right)^2$$

where $C_d$ = drag coefficient, $A_p$ = frontal area of particle and $\rho_f$ = fluid density.
Using Stokes law for drag on a sphere at low Reynold's number gives the drag coefficient as:

$$C_d = \frac{24}{\text{Re}} = \frac{24\mu}{\rho_f \left(U_f - U_p\right)D_p}$$

where $D_p$ = particle diameter and $\mu$ = fluid viscosity.
Solving for K in this model yields:

$$K = 3\pi\mu D_p$$

Using the above relations and 1-dimensional acoustic modeling techniques, the following relation can be derived for the dispersive behavior of an idealized fluid particle mixture.

$$a_{mix}(\omega) = a_f \sqrt{\cfrac{1}{1 + \cfrac{\varphi_p \rho_p}{\rho_f \left(1 + \omega^2 \frac{\rho_p^2 v_p^2}{K^2}\right)}}}$$

In the above relation, the fluid SOS, density ($\rho$) and viscosity ($\phi$) are those of the pure phase fluid, $v_p$ is the volume of individual particles and $\phi_p$ is the volumetric phase fraction of the particles in the mixture.

Two parameters of primary interest in pulverized coal measurements are particle size and air-to-fuel mass ratio. To this end, it is of interest to examine the dispersive characteristics of the mixture as a function of these two variables. Figs. 7 and 8 show the dispersive behavior for coal/air mixtures with parameters typical of those used in pulverized coal deliver systems.

In particular Fig. 7 shows the predicted behavior for nominally 50 $\mu$m size coal in air for a range of air-to-fuel ratios. As shown, the effect of air-to-fuel ratio is well defined in the low frequency limit. However, the effect of the air-to-fuel ratio becomes indistinguishable at higher frequencies, approaching the sound speed of the pure air at high frequencies (above ~100 Hz).

Similarly, Fig. 8 shows the predicted behavior for a coal/air mixture with an air-to-fuel ratio of 1.8 with varying particle size. This figure illustrates that particle size has no influence on either the low frequency limit (quasi-steady) sound speed, or on the high frequency limit of the sound speed. However, particle size does have a pronounced effect in the transition region.

Figs. 7 and 8 illustrate an important aspect of the present invention. Namely, that the dispersive properties of dilute mixtures of particles suspended in a continuous fluid can be broadly classified into three frequency regimes: low frequency range, high frequency range and a transitional frequency range. As best shown in Fig. 8, the speed of sound propagating through the mixture is substantially the same regardless of the particle size in the low frequency range. In the low frequency range the mixture exhibits a quasi-steady model or a no slip (non-dispersive) characteristic. As shown in the intermediate frequency range, the speed of sound propagating through the mixture is dependent on the size of the particle, and thus exhibits dispersive characteristics. For the high frequency range, the speed of sound propagating through the mixture is unaffected by the particles. In other words, the speed of sound in the higher frequency range propagating through the mixture is substantially equally to the speed of sound propagating through the just the fluid with the particles having for effect, which will be described in greater detail hereinafter.

Knowing the effect of dispersion on the speed of sound through a mixture as described herein before, one will appreciate that to determine the concentration of the mixture (e.g., air/fuel ratio), the frequency of the measured acoustic wave is within the low frequency range that exhibits little or no slip (non-dispersive/quasi-steady state), as best shown in Fig. 7. Further, one will appreciate that to determine the particle size within the mixture 12, the frequency of the measured acoustic wave is within the intermediate frequency range that exhibits dispersive characteristics, as shown in Fig. 8.

Although the effect of particle size and air-to-fuel ratio are inter-related, the predominant effect of air-to-fuel ratio is to determine the low frequency limit of the sound speed to be measured and the predominate effect of particle size is to determine the frequency range of the transitional regions. As particle size increases, the frequency at which the dispersive properties appear decreases. For typical pulverized coal applications, this transitional region begins at fairly low frequencies, ∼ 2Hz for 50 μm size particles.

In the low frequency regime, the particles exhibit negligible slip with the fluid. The frequency range for which the no-slip, quasi-steady approximation is valid is a function of a variety of parameters including particle size, continuous phase viscosity, particle shape and particle density.

The quasi-steady (no-slip condition) sound speed is given by the low frequency limit of the above relation, where AFR is air/fuel ratio:

$$a_{mix}(\omega \to 0) = a_f * \sqrt{\frac{1}{1+\dfrac{\varphi_p \rho_p}{\rho_f}}} \cong a_f * \sqrt{\frac{1}{1+\dfrac{1}{AFR}}}$$

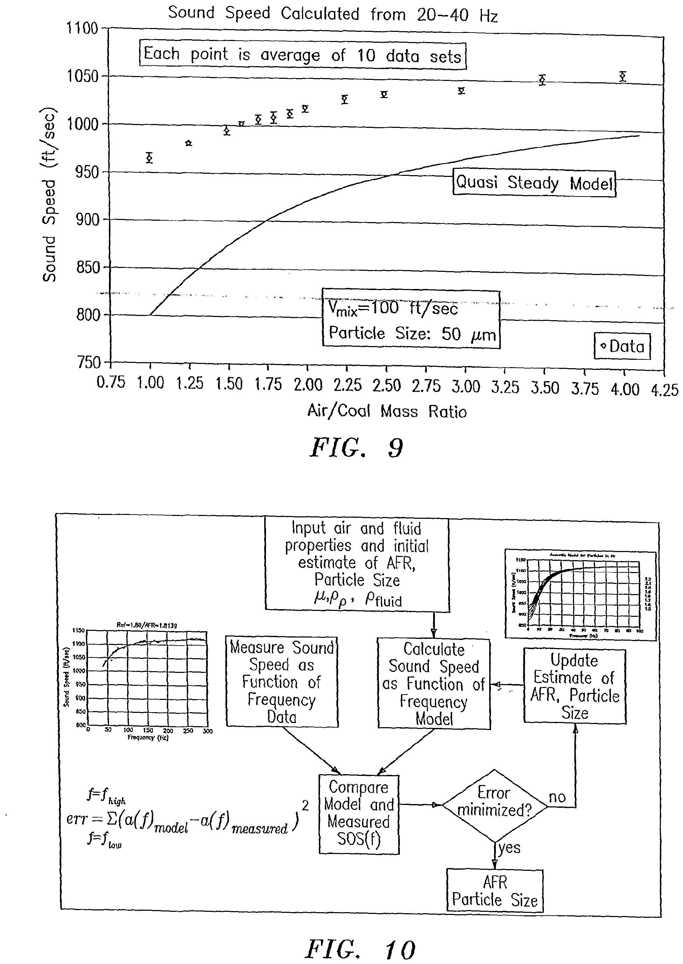

Note that particle size does not affect the low frequency limit of the sound speed. Referring to Fig. 9, the sound speed was measured using an embodiment of the present invention having eight sensors at 20.5 inch spacing, averaged from 20-40 Hz, for a range of air-to-coal mass ratios. The sound speed predicted for the coal/air mixtures using the quasi-steady model are also presented. As shown, although the general trend is captured, i.e. sound speed decreases with increased coal loading, the error is significant, rendering a first principle interpretation, based on a quasi-steady model inadequate.

In the high frequency limit, the dispersion relation predicts the sound speed with asymptote towards the sound speed of the pure fluid.

$$a_{mix}(\omega ==> \infty) = a_{fluid}$$

Interestingly, the high frequency limit is independent of both particle size and air-to-fuel ratio.

Given the difficulties measuring sufficiently low frequencies to apply the quasi-steady model and recognizing that the high frequency sound speed contains no direct information on either particle size or air-to-fuel ratio, it becomes apparent that the dispersive characteristics of the coal/air mixture should be utilized to determine particle size and air-to-fuel ratio based on speed of sound measurements.

As described hereinbefore, the flow meter 10 of the present invention includes the ability to accurately determine the average particle size of the coal in the PF/air mixture within the pipe 14 and the air to fuel ratio. Provided there is no appreciable slip between the air and the solid coal particle, the propagation of one dimensional sound wave through multiphase mixtures is influenced by the effective mass and the effective compressibility of the mixture. For an air transport system, the degree to which the no-slip assumption applies is a strong function of particle size and frequency. In the limit of small particles and low frequency, the no-slip assumption is valid. As the size of the particles increases and the frequency of the sound waves increase, the non-slip assumption becomes increasing less valid. For a given average coal particle size, the increase in slip with frequency causes dispersion, or, in other words, the sound speed of the mixture to change with frequency. With appropriate calibration the dispersive characteristic of a mixture will provide a measurement of the average particle size, as well as, the air to fuel ratio (particle/fluid ratio) of the mixture.

Using the model described above, which yields the equation shown below, and experimentally determined sound speed as function of frequency, the present invention includes an optimization procedure to simultaneously determine particles size and AFR in coal / air mixtures:

$$a_{mix}(\omega) = a_f \sqrt{\frac{1}{1+\dfrac{\varphi_p \rho_p}{\rho_f\left(1+\omega^2 \dfrac{\rho_p^2 v_p^2}{K^2}\right)}}}$$

Referring to Fig. 10 there is shown an optimization procedure in accordance with the present invention in which the free parameters of an analytical model are optimized to minimize an error function. For illustration purposes, the error function utilized is the sum of the differences of the sound speeds between an analytical model and the experimentally determined sound speed as a function of frequency:

$$err = \sum_{f=f_{low}}^{f=f_{high}} (a(f)_{\text{model}} - a(f)_{\text{measured}})^2$$

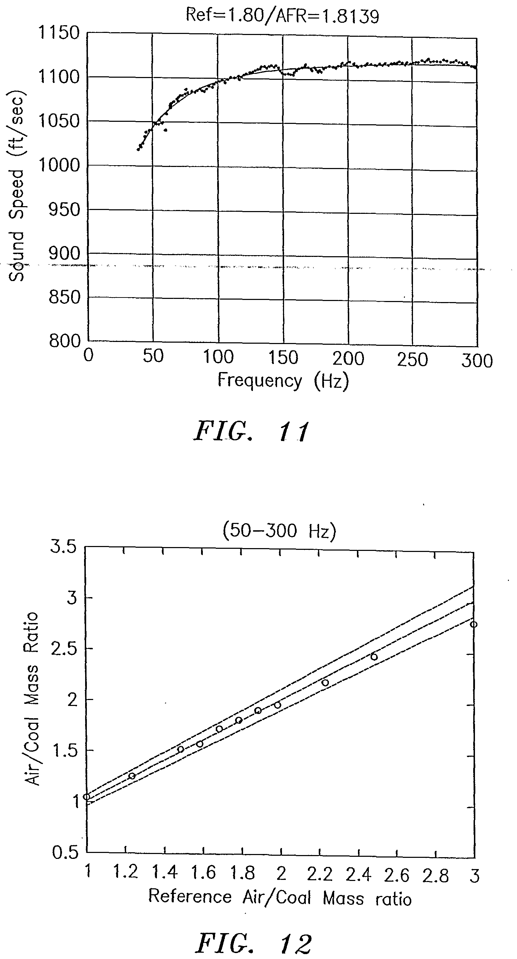

The results of the optimization procedure applied to data recorded from an array of sensors listening to flow in a six inch circular duct, 50 $\mu$m particle size, 100 ft/sec air flow rate with an air-to-fuel ratio of 1.8 is shown in Fig. 11. The measured and optimized-model-predicted sound speed is shown. As shown, the model captures the transitional frequency range well and provides a good estimate of the air-to-fuel ratio.

The results of the optimization procedure applied to a series of data sets with varying air-to-fuel ratio is shown in Fig. 12. Note for this optimization the particle size was held constant over the range of data sets.

As suggested herein before, the length of the array of pressure sensors should be at least a significant fraction of a wavelength of the sound speed of interest. The significant fraction of the wavelength may be at least 30 percent of the wavelength, however, this fraction may be less than 30 percent depending on the desired accuracy of the measurement, the measured wavelength and/or the strength of the acoustic wave (e.g., low signal/noise ratio). Therefore, the length of the array is dependent on the frequency of the sound speed of interest (frequency being inversely proportional to wavelength), wherein the frequency of the sound speed of interest is dependent on the measurement to be determined (e.g., air/particle ratio and particle size) and the dispersion characteristics of the mixture. For example, the low frequency range of the plot of the speed of sound (quasi-steady state) for measuring the concentration of the mixture (e.g., air/particle ratio), shown in Fig. 7, is lower as dispersion of the mixture increases. As described herein before, the dispersion characteristics of the mixture is dependent on the size of the particles among other factors. As the particle size increases, the dispersion becomes greater, and as the particle size decreases, the dispersion becomes lower. Consequently, the length of the array is a function of the size of the particle within the mixture, and therefore, as best shown in Fig. 8, the transition point (low frequency cut-off) between the low frequency range and the intermediate frequency decreases in frequency as the particle size increases.

For example when measuring the concentration of the mixture, as the size of the particles increase, the low frequency cut-off decreases and thus, the acoustic wavelength of interest increases to thereby necessitate the length of the array to be longer. Conversely, as the size of the particles decrease, the low frequency cut-off increase and thus, the acoustic wavelength of interest decreases to thereby necessitate the length of the array to be shorter. Simply stated, the larger the particle, the longer the array and vice versa. The same comparison is true when determining the size of the particles within the mixture. However, for optimal performance of the flow meter, the measurement of the concentration of the mixture may require a longer array than the measurement of the particle size because measurement of the concentration is at a lower frequency (longer wavelength) than the intermediate frequency (shorter wavelength) of the particle size.

The lowest practical measurable frequency range is approximately 10-25 Hz, therefore the measurement of large particle may not be possible to measure the quasi-steady model, which may in some instances be less than 10 Hz (i.e., cut-off frequency less than 10 Hz). Under these circumstances, the frequency of the speed of sound of interest is above the cut-off frequency. However, the measured speed of sound is curve fit to a dispersion model of the mixture by varying the size of the particle and the composition of the mixture to determine the particle size and/or concentration of the mixture, as shown in Fig. 10 that will be described in greater detail hereinafter.

While the length of the array is dependent on the particle size, the length may also be dependent on other parameters that define the amount of dispersion, such as mass of the particles and the viscosity of the fluid within the mixture.

Another factor that defines (or effects) the length of the array of pressure sensors 15-18 includes the signal strength of the acoustic wave received by the processor. As the signal strength improves or is greater, the shorter the length of the array must be. The signal strength is dependent on a number of factors, such as the strength of the acoustic wave itself, the signal/noise ratio of the sensors, the matching of the sensors and others.

The spacing may be equi-spaced as shown in Fig. 1, however the flow meter 10 of the present invention contemplates that the sensors may have non-equal or uneven spacing therebetween. The sensors may be spaced any desired distance, provided the location or position of the sensors are known. For ported pressure sensors, the minimum spacing is limited by mechanical limitations of the sensors. For strain-based sensors, such as PVDF bands described hereinafter, the compliance of the pipe limits the closeness of the spacings. For example, the more rigid the pipe, the greater the spacing of the sensors must be, and conversely, the more compliant the pipe, the closer the sensors may be spaced.

The spacing of the pressure sensors may also be defined by the number of sensors disposed within an array of a given length. The more sensors disposed within the array of a given length, the closer the spacing. The number of sensors disposed within an array is dependent on the required or desired accuracy of the flow meter 10. The greater the number of sensors in the array, a more precise measurement of the acoustic pressure field can be achieved. In other words, a greater number of samples or measurements of the acoustic pressure wave over a given length of the array (or wavelength) provided the sensors enable greater resolution in the measurement of the acoustic wave to be measured or characterized.

In addition to measuring the fluid to particle ratio of the mixture 12 and particle size within a pipe 14 using the measured speed of sound, the flow meter 10 further includes the ability to measure of volumetric flow rate of the mixture by comparing the difference of the speed of one dimensional sound waves propagating with and against the mean flow.

This method of determining the volumetric flow rate of the particle/fluid mixture 12 within pipe 14 relies on the interaction of the mean flow with the acoustic pressure field. The interaction results in sound waves propagating with the mean flow traveling at the speed of sound (if the particle/liquid mixture were not flowing) plus the convection velocity and, conversely, sound waves traveling against the mean flow propagating at the speed of sound minus the convection velocity. That is,

$$a_R = a_{mix} + u$$

$$a_L = a_{mix} - u$$

where $a_R$ = velocity of a right traveling acoustic wave relative to a stationary observer (i.e. the pipe 14), $a_L$ = velocity of a left traveling acoustic wave apparent to a stationary observer, $a_{mix}$ = fluid speed of sound (if the fluid were not flowing) and u = the mean flow velocity (assumed to be flowing from left to right in this instance). Combining these two equations yields an equation for the mean velocity,

$$u = \frac{a_R - a_L}{2}$$

Therefore, by measuring the propagation velocity of acoustic waves in both directions relative to the stationary pipe as described hereinbefore, the mean flow velocity can be calculated by multiplying the mean flow velocity by the cross-sectional area of the pipe 14.

The practicality of using this method to determine the mean flow is predicated on the ability to resolve the sound speed in both directions with sufficient accuracy to determine the volumetric flow. For typical liquid measurements, flow velocities are typically at ~ 10 ft/sec and sound speeds of ~4000 ft/sec. Thus axial mach numbers are on the order of 10/4000 of 0.0025. For a +/- 10% accuracy in flow rate (+/- 1ft/sec), the sound speed of the upstream and downstream propagating waves would need to be resolved to +/-0.5/4000 or 1 part in 8,000.

However, for PF/air mixture flows, axial flow velocities are nominally around 70 ft/sec with no flow sound speeds of ~700 ft/sec. This results in mach numbers of ~0.1, approximately 2 orders of magnitude greater than typical liquid flows. For pulverized fuel flows, to resolve the flow rate to 10% accuracy (or +/- 7 ft/sec), one would have to resolve the sound speed to +/- 3.5 ft/sec, or 3.5/700 or 1 part in 200.

For the sound speed measurement, the flow meter 10 utilizes similar processing algorithms as those employed herein before. The temporal and spatial frequency content of sound propagating within the process piping 14 is related through a dispersion relationship.

$$\omega = k \, a_{mix}$$

The wave number is k, which is defined as $k = 2\pi/\lambda$, $\omega$ is the temporal frequency in rad/sec, and $a_{mix}$ is the speed at which sound propagates within the process piping. For this cases where sound propagates in both directions, the acoustic power is located along two acoustic ridges, one for the sound traveling with the flow at a speed of $a_{mix} + V_{mix}$ and one for the sound traveling against the flow at a speed of $a_{mix} - V_{mix}$.

The k-w plot shown in Fig. 13 illustrates the fundamental principle behind sonar based flow measure, namely that axial arrays of pressure sensors can be used in conjunction with sonar processing techniques to determine the speed at which naturally occurring turbulent eddies convect within a pipe. Fig. 13 shows a k-$\omega$ plot generated for acoustic sound field of a coal/air mixture flowing through a pipe. Two acoustic ridges are clearly evident. Each of the slopes of the two depicted acoustic ridges respectively defines the speed of sound traveling with and against the mean flow, respectively. A parametric optimization method was used to determine the "best" line representing the slope of the acoustic ridge.

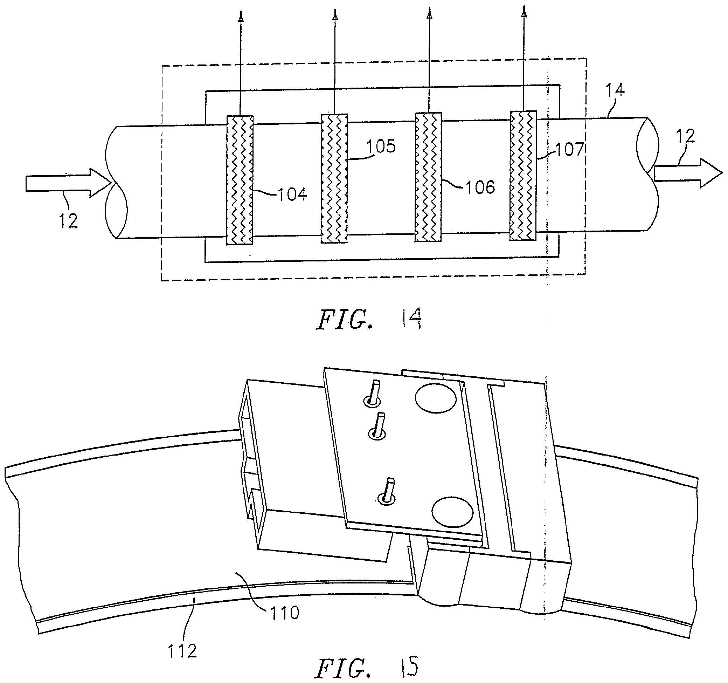

Further, Fig. 13 illustrates the ability of the present invention to determine the velocity of a fluid moving in a pipe. Fig. 14 shows a wavenumber-frequency plot (k-w plot) of unsteady pressure. The contours represent the relative signal power at all combinations of frequency and wavenumber. The highest power "ridges" represent the acoustic wave with slope of the ridges equal to the propagation speed. The dashed lines show the best-fit two-variable maximization of the power with the two variables being sound speed and flow velocity. The right-side ridge represents the acoustic wave traveling in the same direction as the bulk flow and therefore its slope is steeper than the left-side ridge that represents the acoustic wave traveling in the opposite direction of the bulk flow. This indicates that the acoustic wave traveling in the same direction of the flow is traveling faster than the acoustic wave traveling in the opposite direction of the bulk flow relative to the stationary sensors located on the pipe.

The pressure sensors 15-18 described herein may be any type of pressure sensor, capable of measuring the unsteady (or ac or dynamic) pressures within a pipe 14, such as piezoelectric, optical, capacitive, resistive (e.g., Wheatstone bridge), accelerometers (or geophones), velocity measuring devices, displacement measuring devices, etc. If optical pressure sensors are used, the sensors 15-18 may be Bragg grating based pressure sensors, such as that described in US Patent Application, Serial No. 08/925,598, entitled " High Sensitivity Fiber Optic Pressure Sensor For Use In Harsh Environments", filed Sept. 8, 1997, now U.S. Patent 6,016,702. Alternatively, the sensors 14 may be electrical or optical strain gages attached to or embedded in the outer or inner wall of the pipe which measure pipe wall strain, including microphones, hydrophones, or any other sensor capable of measuring the unsteady pressures within the pipe 14. In an embodiment of the present invention that utilizes fiber optics as the pressure sensors 14 they may be connected individually or may be multiplexed along one or more optical fibers using wavelength division multiplexing (WDM), time division multiplexing (TDM), or any other optical multiplexing techniques.

For any of the embodiments described herein, the pressure sensors, including electrical strain gages, optical fibers and/or gratings among others as described herein, may be attached to the pipe by adhesive, glue, epoxy, tape or other suitable attachment means to ensure suitable contact between the sensor and the pipe 14. The sensors may alternatively be removable or permanently attached via known mechanical techniques such as mechanical fastener, spring loaded, clamped, clam shell arrangement, strapping or other equivalents. Alternatively, the strain gages, including optical fibers and/or gratings, may be embedded in a composite pipe. If desired, for certain applications, the gratings may be detached from (or strain or acoustically isolated from) the pipe 14 if desired.

It is also within the scope of the present invention that any other strain sensing technique may be used to measure the variations in strain in the pipe, such as highly sensitive piezoelectric, electronic or electric, strain gages attached to or embedded in the pipe 14.

In certain embodiments of the present invention, a piezo-electronic pressure transducer may be used as one or more of the pressure sensors 15-18 and it may measure the unsteady (or dynamic or ac) pressure variations inside the pipe 14 by measuring the pressure levels inside of the pipe. In an embodiment of the present invention, the sensors 14 comprise pressure sensors manufactured by PCB Piezotronics. In one pressure sensor there are integrated circuit piezoelectric voltage mode-type sensors that feature built-in microelectronic amplifiers, and convert the high-impedance charge into a low-impedance voltage output. Specifically, a Model 106B manufactured by PCB Piezotronics is used which is a high sensitivity, acceleration compensated integrated circuit piezoelectric quartz pressure sensor suitable for measuring low pressure acoustic phenomena in hydraulic and pneumatic systems. It has the unique capability to measure small pressure changes of less than 0.001 psi under high static conditions. The 106B has a 300 mV/psi sensitivity and a resolution of 91 dB (0.0001 psi).

The pressure sensors incorporate a built-in MOSFET microelectronic amplifier to convert the high-impedance charge output into a low-impedance voltage signal. The sensor is powered from a constant-current source and can operate over long coaxial or ribbon cable without signal degradation. The low-impedance voltage signal is not affected by triboelectric cable noise or insulation resistance-degrading contaminants. Power to operate integrated circuit piezoelectric sensors generally takes the form of a low-cost, 24 to 27 VDC, 2 to 20 mA constant-current supply. A data acquisition system of the present invention may incorporate constant-current power for directly powering integrated circuit piezoelectric sensors.

Most piezoelectric pressure sensors are constructed with either compression mode quartz crystals preloaded in a rigid housing, or unconstrained tourmaline crystals. These designs give the sensors microsecond response times and resonant frequencies in the hundreds of kHz, with minimal overshoot or ringing. Small diaphragm diameters ensure spatial resolution of narrow shock waves.

The output characteristic of piezoelectric pressure sensor systems is that of an AC-coupled system, where repetitive signals decay until there is an equal area above and below the original base line. As magnitude levels of the monitored event fluctuate, the output remains stabilized around the base line with the positive and negative areas of the curve remaining equal.

Furthermore the present invention contemplates that each of the pressure sensors 15-18 of the flow meters 10,70 may include a piezoelectric sensor 104 -107 that provides a piezoelectric material 110 to measure the unsteady pressures of the fluid/particle mixture 12 as shown in Fig. 14. The piezoelectric material, such as the polymer, polarized fluoropolymer, polyvinylidene fluoride (PVDF), measures the strain induced within the process pipe 14 due to unsteady pressure variations within the process mixture 12. Strain within the pipe is transduced to an output voltage or current by the attached piezoelectric sensors 104-107.

As best shown in Fig. 15, the PVDF material 110 is adhered to the outer surface of a steel strap 112 that extends around and clamps onto the outer surface of the pipe 14. The piezoelectric sensing element is typically conformal to allow complete or nearly complete circumferential measurement of induced strain. The sensors can be formed from PVDF films, co-polymer films, or flexible PZT sensors, similar to that described in "Piezo Film Sensors technical Manual" provided by Measurement Specialties, Inc., which is incorporated herein by reference. The advantages of this technique are the following:

1. Non-intrusive flow rate measurements

2. Low cost

3. Measurement technique requires no excitation source. Ambient flow noise is used as a source.

4. Flexible piezoelectric sensors can be mounted in a variety of configurations to enhance signal detection schemes. These configurations include a) co-located sensors, b) segmented sensors with opposing polarity configurations, c) wide sensors to enhance acoustic signal detection and minimize vortical noise detection, d) tailored sensor geometries to minimize sensitivity to pipe modes, e) differencing of sensors to eliminate acoustic noise from vortical signals.

5. Higher Temperatures (140C) (co-polymers)

While the present invention illustrates that the array of pressure sensors comprises a plurality of like sensors, the present invention contemplates that any combination of different or similar pressure sensors may be used within an array.

While the present invention is capable of measuring solid particles suspended in a fluid, one will appreciate that other multi-phase mixtures or flows may be measured using an array of sensors, such as steam flow. It is further recognize the that effects of dispersion on large solid particles in a fluid would be similar to large droplets of a liquid dispersed in a gas or air, and thus similar considerations when measuring the steam quality and droplet size should be addressed.

It should be understood that any of the features, characteristics, alternatives or modifications described regarding a particular embodiment herein may also be applied, used, or incorporated with any other embodiment described herein.

**Claims**

**1.** An apparatus (10) for measuring at least one parameter of a particle/fluid mixture (12) in a pipe (14), comprising:

a spatial array of at least two pressure sensors (15-18), disposed at different axial locations along the pipe (14), and each measuring an unsteady pressure within the pipe (14) at a corresponding axial location ($X_1$, $X_2$, $X_3$, $X_n$), each of said sensors (15-18) providing a pressure signal ($P_1(t)$, $P_2(t)$, $P_2(t)$, $P_N(t)$), indicative of the unsteady pressure within the pipe (14) at said axial location ($X_1$, $X_2$, $X_3$, $X_n$) of a corresponding one of said sensors (15-18); and
a signal processor (30), responsive to said pressure signals ($P_1(t)$, $P_2(t)$, $P_2(t)$, $P_N(t)$), which is configured

to provide a signal indicative of the speed of sound propagating through the mixture (12) in the pipe (14), said signal being a function of the frequency of the sound propagating through the mixture (12); and
to utilize a dispersion model to determine the at least one parameter of the mixture (12) from the signal indicative of the speed of sound
wherein a signal indicating the speed of sound in a first frequency range is used for determining the concentration of the particle/fluid mixture (12) and a signal indicating the speed of sound in a second frequency range is used for determining the particle size within the particle/fluid mixture (12), wherein the frequencies within the second frequency range are larger than the frequencies within the first frequency range.

**2.** The apparatus of claim 1 wherein each sensor (15-18) is arranged to measure an acoustic pressure and to provide a signal indicative of an acoustic noise within the pipe (14).

3. The apparatus of claim 1 or 2 wherein said signal processor (30) comprises logic (38) which is arranged to calculate a speed at which sound propagates along said spatial array.

4. The apparatus of any of the claims 1 to 3 wherein said signal processor (30) comprises logic (26-29) which is arranged to calculate a frequency based signal (P1($\omega$), P2($\omega$), P2($\omega$), PN($\omega$)) for each of said acoustic pressure signals (P1(t), P2(t), P2(t), PN(t)).

5. The apparatus of any of the claims 1 to 4 wherein said acoustic pressure signals (P1(t), P2(t), P2(t) each comprise a frequency based signal (P1($\omega$), P2($\omega$), P2($\omega$), PN($\omega$)) and wherein said signal processor (30) comprises logic (38) which is arranged to calculate a ratio of two of said frequency based signals (P1($\omega$), P2($\omega$), P2($\omega$), PN($\omega$)).

6. The apparatus of any of the claims 1 to 5 comprising at least three of said sensors (15-18).

7. The apparatus of any of the preceding claims wherein the signal processor (30) comprises logic (42) which is arranged to calculate a fluid composition of the mixture (12) in the pipe.

8. The apparatus of any of the preceding claims wherein at least one of said pressure sensors (15- 18) is arranged to measure a circumference-averaged pressure at said axial location (X1, X2, X3, Xn) of said sensor (15-18).

9. The apparatus of any of the preceding claims wherein at least one of said pressure sensors (15-18) includes a piezoelectric sheet material.

10. The apparatus of claim 9 wherein the piezoelectric sheet material is polarized fluoropolymer, polyvinylidene fluoride (PVDF).

11. The apparatus of any of the preceding claims wherein at least one of said pressure sensors (15-18) is arranged to measure strain on the pipe.

12. The apparatus of claim 2 wherein the array of acoustic sensors (15-18) are spaced sufficiently such that the entire length of the array is at least a significant fraction of the measured wavelength of the acoustic waves being measured.

13. A method for measuring at least one parameter of a particle/fluid mixture (12) in a pipe (14), said method comprising:

measuring unsteady pressures within the pipe (14) at at least two predetermined axial measurement locations ($X_1$, $X_2$, $X_3$, $X_n$) along the pipe (14) to provide a pressure signal ($P_1$(t), $P_2$(t), $P_2$(t), $P_N$(t)) indicative of the speed of sound propagating through the mixture (12) in the pipe (14) at each of the at least two predetermined axial measurement locations ($X_1$, $X_2$, $X_3$, $X_n$), said signal being a function of the frequency of the sound propagating through the mixture (12); and
calculating the at least one parameter of the particle/fluid mixture (12) in the pipe (14) utilizing a dispersion model to determine the at least one parameter of the mixture (12) from the signal indicative of the speed of sound; wherein the signal indicating the speed of sound in a first frequency range is used for determining the concentration of the particle/fluid mixture (12) and a signal indicating the speed of sound in a second frequency range is used for determining the particle size within the particle/fluid mixture (12), wherein the frequencies within the second frequency range are larger than the frequencies within the first frequency range.

14. The method of claim 13 wherein the measured unsteady pressures are acoustic pressures to provide a signal indicative of an acoustic noise within the pipe.

15. The method of claim 13 or 14 wherein the calculating the at least one parameter uses an acoustic pressure to calculate a speed at which sound propagates along said spatial array.

16. The method of any of the claims 13 to 15 wherein the calculating the at least one parameter uses an acoustic pressure to calculate a frequency based signal (P1($\omega$), P2($\omega$), P2($\omega$), PN($\omega$)) for each of said acoustic pressure signals (P1(t), P2(t), P2(t), PN(t)).

17. The method of any of the claims 13 to 16 wherein said acoustic pressure signals (P1(t), P2(t), P2(t), PN(t)) each comprise a frequency based signal (P1($\omega$), P2($\omega$), P2($\omega$), PN($\omega$)) and wherein said signal processor (30) comprises logic (38) which calculates a ratio of two of said frequency based signals.

18. The method of any of the claims 13 to 17 wherein measuring the unsteady pressures is at at least three of said sensors (15-18).

19. The method of any of the claims 13 to 18 wherein the calculating the at least one parameter uses an acoustic pressure to calculate a fluid composition of the mixture (12) in the pipe.

20. The method of any of the claims 13 to 19 wherein measuring unsteady pressure includes measuring a circumference-averaged pressure at at least an axial location of a sensor (15-18).

21. The method of any of the claims 13 to 20 wherein measuring unsteady pressures uses at least one of said pressure sensors (15-18) includes a piezoelectric sheet material.

22. The method of claim 21 wherein the piezoelectric sheet material is polarized fluoropolymer, polyvinylidene fluoride (PVDF).

23. The method of any of the claims 13 to 22 wherein at least one of said pressure sensors (15-18) measures strain on the pipe.

24. The method of any of the claim 13 to 23 wherein the frequency based sound speed is determined utilizing a dispersion model to determine the at least one parameter of the mixture (12).

25. The method of any of the claims 13 to 24 wherein the array of acoustic sensors (15-18) are spaced sufficiently such that the entire length of the array is at least a significant fraction of the measured wavelength of the acoustic waves being measured.

**Patentansprüche**

1. Vorrichtung (10) zum Messen mindestens eines Parameters einer Partikel/Fluidmischung (12) in einem Rohr (14), die umfasst:

   eine räumliche Anordnung von mindestens zwei Drucksensoren (15-18), die an verschiedenen axialen Stellen entlang des Rohres (14) angeordnet sind und jeweils einen schwankenden Druck in dem Rohr (14) an einer entsprechenden axialen Stelle $(X_1, X_2, X_3, X_n)$ messen, wobei jeder der Sensoren (15-18) ein Drucksignal $(P_1(t), P_2(t), P_2(t), P_2(t), P_N(t))$ bereitstellt, das den schwankenden Druck in dem Rohr (14) an der axialen Stelle $(X_1, X_2, X_3, X_n)$ eines der entsprechenden Sensoren (15-18) anzeigt; und
   einen Signalprozessor (30), der auf die Drucksignale $(P_1(t), P_2(t), P_2(t), P_N(t))$ reagiert und der dazu ausgelegt ist, ein Signal bereitzustellen, das die Geschwindigkeit des Schalls anzeigt, der sich durch die Mischung (12) in dem Rohr (14) ausbreitet, wobei das Signal eine Funktion der Frequenz des sich durch die Mischung (12) ausbreitenden Schalls ist; und
   ein Dispersionsmodell zum Bestimmen des mindestens einen Parameters der Mischung (12) aus dem Signal zu nutzen, das die Geschwindigkeit des Schalls anzeigt,
   wobei ein Signal, das die Geschwindigkeit des Schalls in einem ersten Frequenzbereich anzeigt, zum Bestimmen der Konzentration der Partikel/Fluidmischung (12) verwendet wird, und ein Signal, das die Geschwindigkeit des Schalls in einem zweiten Frequenzbereich anzeigt, zum Bestimmen der Partikelgröße in der Partikel/Fluidmischung (12) verwendet wird, wobei die Frequenzen in dem zweiten Frequenzbereich höher sind als die Frequenzen in dem ersten Frequenzbereich.

2. Vorrichtung nach Anspruch 1, wobei jeder Sensor (15-18) dafür vorgesehen ist, einen akustischen Druck zu messen und ein Signal bereitzustellen, das ein akustisches Rauschen in dem Rohr (14) anzeigt.

3. Vorrichtung nach Anspruch 1 oder 2, wobei der Signalprozessor (30) eine Logik (38) umfasst, die dafür vorgesehen ist, eine Geschwindigkeit zu berechnen, mit der sich Schall entlang der räumlichen Anordnung ausbreitet.

4. Vorrichtung nach einem der Ansprüche 1 bis 3, wobei der Signalprozessor (30) eine Logik (26-29) umfasst, die dafür vorgesehen ist, ein frequenzbasiertes Signal $(P1(\omega), P2(\omega), P2(\omega), PN(\omega))$ für jedes der Signale des akustischen Drucks $(P1(t), P2(t), P2(t), PN(t))$ zu berechnen.

**5.** Vorrichtung nach einem der Ansprüche 1 bis 4, wobei die Signale des akustischen Drucks (P1(t), P2(t), P2(t)) jeweils ein frequenzbasiertes Signal (P1($\omega$), P2($\omega$), P2($\omega$), PN($\omega$)) umfassen und wobei der Signalprozessor (30) eine Logik (38) umfasst, die dafür vorgesehen ist, ein Verhältnis von zwei der frequenzbasierten Signale (P1($\omega$), P2($\omega$), P2($\omega$), PN($\omega$)) zu berechnen.

**6.** Vorrichtung nach einem der Ansprüche 1 bis 5, die mindestens drei der Sensoren (15-18) umfasst.

**7.** Vorrichtung nach einem der vorhergehenden Ansprüche, wobei der Signalprozessor (30) eine Logik (42) umfasst, die dafür vorgesehen ist, eine Fluidzusammensetzung der Mischung (12) in dem Rohr zu berechnen.

**8.** Vorrichtung nach einem der vorhergehenden Ansprüche, wobei mindestens einer der Drucksensoren (15- 18) dafür vorgesehen ist, einen umfangsmäßig gemittelten Druck an der axialen Stelle (X1, X2, X3, Xn) des Sensors (15-18) zu messen.

**9.** Vorrichtung nach einem der vorhergehenden Ansprüche, wobei mindestens einer der Drucksensoren (15-18) ein piezoelektrisches Folienmaterial umfasst.

**10.** Vorrichtung nach Anspruch 9, wobei das piezoelektrische Folienmaterial polarisiertes Fluorpolymer, Polyvinylidenfluorid (PVDF) ist.

**11.** Vorrichtung nach einem der vorhergehenden Ansprüche, wobei mindestens einer der Drucksensoren (15-18) dafür vorgesehen ist, die Beanspruchung des Rohrs zu messen.

**12.** Vorrichtung nach Anspruch 2, wobei die Anordnung von akustischen Sensoren (15-18) ausreichend beabstandet ist, damit die gesamte Länge der Anordnung mindestens einen wesentlichen Teil der gemessenen Wellenlänge der gemessenen akustischen Wellen ausmacht.

**13.** Verfahren zum Messen mindestens eines Parameters einer Partikel/Fluidmischung (12) in einem Rohr (14), wobei das Verfahren umfasst:

Messen von schwankenden Druckverhältnissen in dem Rohr (14) an mindestens zwei vorgegebenen axialen Messstellen ($X_1$, $X_2$, $X_3$, $X_n$) entlang des Rohres (14), um ein Drucksignal ($P_1$(t), $P_2$(t), $P_2$(t), $P_N$(t)) bereitzustellen, das die Geschwindigkeit des Schalls, der sich durch die Mischung (12) in dem Rohr (14) ausbreitet, an jeder der mindestens zwei vorgegebenen axialen Messstellen ($X_1$, $X_2$, $X_3$, $X_n$) anzeigt, wobei das Signal eine Funktion der Frequenz des sich durch die Mischung (12) ausbreitenden Schalls ist; und
Berechnen des mindestens einen Parameters der Partikel/Fluidmischung (12) in dem Rohr (14) unter Verwendung eines Dispersionsmodells, um den mindestens einen Parameter der Mischung (12) aus dem Signal zu bestimmen, das die Geschwindigkeit des Schalls anzeigt;
wobei das Signal, das die Geschwindigkeit des Schalls in einem ersten Frequenzbereich anzeigt, zum Bestimmen der Konzentration der Partikel/Fluidmischung (12) verwendet wird, und ein Signal, das die Geschwindigkeit des Schalls in einem zweiten Frequenzbereich anzeigt, zum Bestimmen der Partikelgröße in der Partikel/Fluidmischung (12) verwendet wird, wobei die Frequenzen in dem zweiten Frequenzbereich höher sind als die Frequenzen in dem ersten Frequenzbereich.

**14.** Verfahren nach Anspruch 13, wobei die gemessenen schwankenden Druckverhältnisse Verhältnisse von akustischem Druck sind, um ein Signal bereitzustellen, das ein akustisches Rauschen in dem Rohr anzeigt.

**15.** Verfahren nach Anspruch 13 oder 14, wobei das Berechnen des mindestens einen Parameters einen akustischen Druck verwendet, um eine Geschwindigkeit zu berechnen, mit der sich Schall entlang der räumlichen Anordnung ausbreitet.

**16.** Verfahren nach einem der Ansprüche 13 bis 15, wobei das Berechnen des mindestens einen Parameters einen akustischen Druck verwendet, um ein frequenzbasiertes Signal (P1($\omega$), P2($\omega$), P2($\omega$), PN($\omega$)) für jedes der Signale akustischen Drucks (P1(t), P2(t), P2(t), PN(t)) zu berechnen.

**17.** Verfahren nach einem der Ansprüche 13 bis 16, wobei die Signale akustischen Drucks (P1(t), P2(t), P2(t), PN(t)) jeweils ein frequenzbasiertes Signal (P1($\omega$), P2($\omega$), P2($\omega$), PN($\omega$)) umfassen und wobei der Signalprozessor (30) eine Logik (38) umfasst, die ein Verhältnis von zwei der frequenzbasierten Signale berechnet.

**18.** Verfahren nach einem der Ansprüche 13 bis 17, wobei das Messen der schwankenden Druckverhältnisse an mindestens drei der Sensoren (15-18) stattfindet.

**19.** Verfahren nach einem der Ansprüche 13 bis 18, wobei das Berechnen des mindestens einen Parameters einen akustischen Druck verwendet, um eine Fluidzusammensetzung der Mischung (12) in dem Rohr zu berechnen.

**20.** Verfahren nach einem der Ansprüche 13 bis 19, wobei das Messen von schwankendem Druck das Messen eines umfangsmäßig gemittelten Drucks an mindestens einer axialen Stelle eines Sensors (15-18) umfasst.

**21.** Verfahren nach einem der Ansprüche 13 bis 20, wobei das Messen von schwankenden Druckverhältnissen mindestens einen der Drucksensoren (15-18) verwendet, der ein piezoelektrisches Folienmaterial umfasst.

**22.** Verfahren nach Anspruch 21, wobei das piezoelektrische Folienmaterial polarisiertes Fluorpolymer, Polyvinylidenfluorid (PVDF) ist.

**23.** Verfahren nach einem der Ansprüche 13 bis 22, wobei mindestens einer der Drucksensoren (15-18) die Beanspruchung des Rohrs misst.

**24.** Verfahren nach einem der Ansprüche 13 bis 23, wobei die frequenzbasierte Geschwindigkeit des Schalls unter Verwendung eines Dispersionsmodells bestimmt wird, um den mindestens einen Parameter der Mischung (12) zu bestimmen.

**25.** Verfahren nach einem der Ansprüche 13 bis 24, wobei die Anordnung der akustischen Sensoren (15-18) ausreichend beabstandet ist, damit die gesamte Länge der Anordnung mindestens einen wesentlichen Teil der gemessenen Wellenlänge der gemessenen akustischen Wellen ausmacht.

**Revendications**

**1.** Appareil (10) pour mesurer au moins un paramètre d'un mélange particules/fluide (12) dans un conduit (14), comprenant :

un réseau spatial d'au moins deux capteurs de pression (15-18) disposés à différents endroits axiaux le long du conduit (14), et chacun mesurant une pression instable régnant au sein du conduit (14) à un endroit axial correspondant ($X_1$, $X_2$, $X_3$, $X_n$), chacun desdits capteurs (15-18) procurant un signal de pression ($P_1(t)$, $P_2(t)$, P2(t), $P_N(t)$), révélateur de la pression instable régnant au sein du conduit (14) audit endroit axial ($X_1$, $X_2$, $X_3$, $X_n$) d'un capteur correspondant parmi lesdits capteurs (15-18) ; et
un processeur de signaux (30) sensible auxdits signaux de pression ($P_1(t)$, $P_2(t)$, $P_2(t)$, $P_N(t)$), qui est configuré :

pour procurer un signal révélateur de la vitesse du son qui se propage à travers le mélange (12) dans le conduit (14), ledit signal représentant une fonction de la fréquence du son qui se propage à travers le mélange (12) ; et
pour utiliser un modèle de dispersion destiné à déterminer ledit au moins un paramètre du mélange (12) à partir du signal révélateur de la vitesse du son ;
dans lequel un signal révélateur de la vitesse du son dans une première plage de fréquences est utilisé pour déterminer la concentration du mélange particules/fluide (12) et un signal révélateur de la vitesse du son dans une seconde plage de fréquences est utilisé pour déterminer la granulométrie au sein du mélange particules/fluide (12), les fréquences au sein de la seconde plage de fréquences étant supérieures aux fréquences au sein de la première plage de fréquences.

**2.** Appareil selon la revendication 1, dans lequel chaque capteur (15-18) est conçu pour mesurer une pression acoustique et pour fournir un signal révélateur d'un bruit acoustique au sein du conduit (14).

**3.** Appareil selon la revendication 1 ou 2, dans lequel ledit processeur de signaux (30) comprend une logique (38) qui est conçue pour calculer une vitesse à laquelle le son se propage le long dudit réseau spatial.

**4.** Appareil selon l'une quelconque des revendications 1 à 3, dans lequel ledit processeur de signaux (30) comprend une logique (26-29) qui est conçue pour calculer un signal basé sur la fréquence ($P1(\omega)$, $P2(\omega)$, $P2(\omega)$, $PN(\omega)$), pour

chacun desdits signaux de pression acoustique (P1(t), P2(t), P2(t), PN(t)).

5. Appareil selon l'une quelconque des revendications 1 à 4, dans lequel lesdits signaux de pression acoustique (P1(t), P2(t), P2(t) comprennent chacun un signal basé sur la fréquence (P1($\omega$), P2($\omega$), P2($\omega$), PN($\omega$)) ; et dans lequel ledit processeur de signaux (30) comprend une logique (38) qui est conçue pour calculer un rapport de deux desdits signaux basés sur la fréquence (P1($\omega$), P2($\omega$), P2($\omega$), PN($\omega$)).

6. Appareil selon l'une quelconque des revendications 1 à 5, comprenant au moins trois desdits capteurs (15-18).

7. Appareil selon l'une quelconque des revendications précédentes, dans lequel le processeur de signaux (30) comprend une logique (42) qui est conçue pour calculer une composition de fluide du mélange (12) dans le conduit.

8. Appareil selon l'une quelconque des revendications précédentes, dans lequel au moins un desdits capteurs de pression (15-18) est conçu pour mesurer une pression dont on a fait la moyenne sur base de la circonférence audit endroit axial (X1, X2, X3, Xn) dudit capteur (15-18).

9. Appareil selon l'une quelconque des revendications précédentes, dans lequel au moins un desdits capteurs de pression (15-18) englobe une matière en feuille de type piézo-électrique.

10. Appareil selon la revendication 9, dans lequel la matière en feuille de type piézo-électrique représente un fluoropolymère polarisé, le fluorure de polyvinylidène (PVDF).

11. Appareil selon l'une quelconque des revendications précédentes, dans lequel au moins un desdits capteurs de pression (15-18) est conçu pour mesurer la contrainte s'exerçant sur le conduit.

12. Appareil selon la revendication 2, dans lequel les capteurs acoustiques (15-18) au sein de leur réseau sont suffisamment espacés pour que la longueur totale du réseau représente au moins une fraction significative de la longueur d'onde mesurée des ondes acoustiques en train d'être mesurées.

13. Procédé pour mesurer au moins un paramètre d'un mélange particules/fluide (12) dans un conduit (14), ledit procédé comprenant le fait de :

mesurer des pressions instables régnant au sein du conduit (14) à au moins deux endroits axiaux de mesure prédéterminés ($X_1$, $X_2$, $X_3$, $X_n$) le long du conduit (14) afin de procurer un signal de pression ($P_1$(t), $P_2$(t), P2(t), $P_N$(t)) révélateur de la vitesse du son qui se propage à travers le mélange (12) dans le conduit (14) à chacun desdits au moins deux endroits axiaux de mesure prédéterminés ($X_1$, $X_2$, $X_3$, $X_n$), ledit signal représentant une fonction de la fréquence du son qui se propage à travers le mélange (12) ; et
calculer ledit au moins un paramètre du mélange particules/fluide (12) dans le conduit (14) en utilisant un modèle de dispersion destiné à déterminer ledit au moins un paramètre du mélange (12) à partir du signal révélateur de la vitesse du son ;
dans lequel le signal révélateur de la vitesse du son dans une première plage de fréquences est utilisé pour déterminer la concentration du mélange particules/fluide (12) et un signal révélateur de la vitesse du son dans une seconde plage de fréquences est utilisé pour déterminer la granulométrie au sein du mélange particules/fluide (12), les fréquences au sein de la seconde plage de fréquences étant supérieures aux fréquences au sein de la première plage de fréquences.

14. Procédé selon la revendication 13, dans lequel les pressions instables mesurées représentent des pressions acoustiques destinées à procurer un signal révélateur d'un bruit acoustique au sein du conduit.

15. Procédé selon la revendication 13 ou 14, dans lequel le calcul dudit au moins un paramètre utilise une pression acoustique dans le but de calculer une vitesse à laquelle le son se propage le long dudit réseau spatial.

16. Procédé selon l'une quelconque des revendications 13 à 15, dans lequel le calcul dudit au moins un paramètre utilise une pression acoustique dans le but de calculer un signal basé sur la fréquence (P1($\omega$), P2($\omega$), P2($\omega$), PN($\omega$)), pour chacun desdits signaux de pression acoustique (P1(t), P2(t), P2(t), PN(t)).

17. Procédé selon l'une quelconque des revendications 13 à 16, dans lequel lesdits signaux de pression acoustique (P1(t), P2(t), P2(t), PN(t)) comprennent chacun un signal basé sur la fréquence (P1($\omega$), P2($\omega$), P2($\omega$), PN($\omega$)) ; et

dans lequel ledit processeur de signaux (30) comprend une logique (38) qui est conçue pour calculer un rapport de deux desdits signaux basés sur la fréquence.

18. Procédé selon l'une quelconque des revendications 13 à 17, dans lequel la mesure des pressions instables est mise en oeuvre à au moins trois desdits capteurs (15-18).

19. Procédé selon l'une quelconque des revendications 13 à 18, dans lequel le calcul dudit au moins un paramètre utilise une pression acoustique dans le but de calculer une composition de fluide du mélange (12) dans le conduit.

20. Procédé selon l'une quelconque des revendications 13 à 19, dans lequel dans lequel la mesure d'une pression instable englobe le fait de mesurer une pression dont on a fait la moyenne sur base de la circonférence à au moins un endroit axial d'un capteur (15-18).

21. Procédé selon l'une quelconque des revendications 13 à 20, dans lequel la mesure de pressions instables utilise au moins un desdits capteurs de pression (15-18) qui englobe une matière en feuille de type piézo-électrique.

22. Procédé selon la revendication 21, dans lequel la matière en feuille de type piézo-électrique représente un fluoropolymère polarisé, le fluorure de polyvinylidène (PVDF).

23. Procédé selon l'une quelconque des revendications 13 à 22, dans lequel au moins un desdits capteurs de pression (15-18) mesure la contrainte s'exerçant sur le conduit.

24. Procédé selon l'une quelconque des revendications 13 à 23, dans lequel la vitesse du son basée sur la fréquence est déterminée en utilisant un modèle de dispersion dans le but de déterminer ledit au moins un paramètre du mélange (12).

25. Procédé selon l'une quelconque des revendications 13 à 24, dans lequel les capteurs acoustiques (15-18) au sein de leur réseau sont suffisamment espacés pour que la longueur totale du réseau représente au moins une fraction significative de la longueur d'onde mesurée des ondes acoustiques en train d'être mesurées.

*FIG. 1*

FIG. 2

**FIG. 3**

**FIG. 13**

SOS of Pulverized Coal/Air Mixtures — Region of Interest

FIG. 4

FIG. 5

FIG. 6

Acoustic Model for Particles in Air

FIG. 7

Acoustic Model for Particles in Air

FIG. 8

Sound Speed Calculated from 20–40 Hz

*FIG. 9*

*FIG. 10*

Ref=1.80/AFR=1.8139

FIG. 11

(50-300 Hz)

FIG. 12

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 34971603 A
- US 35123202 P
- US 35978502 P
- US 37584702 P
- US 42543602 P
- US 42672402 P
- US 37642703 A

- WO 0000793 A1
- WO 0102810 A1
- US 6354147 B
- US 00774901 A
- US 92559897 A
- US 6016702 A

**Non-patent literature cited in the description**

- **DUCTS ; MUFFLERS.** M.J. Munjal. John Wiley & Sons, 1987